## Europäisches Patentamt
## European Patent Office
## Office européen des brevets

(11) Veröffentlichungsnummer: **0 120 252**
**B1**

(12) # EUROPÄISCHE PATENTSCHRIFT

(45) Veröffentlichungstag der Patentschrift:
24.09.86

(21) Anmeldenummer: **84101414.5**

(22) Anmeldetag: **11.02.84**

(51) Int. Cl.⁴: **C 09 J 3/14,** C 08 F 291/18, C 08 F 255/02

(54) Verwendung von gepfropften Ethylen-Vinylacetat-Copolymeren als Schmelzkleber.

(30) Priorität: **23.02.83 DE 3306202**

(43) Veröffentlichungstag der Anmeldung:
**03.10.84 Patentblatt 84/40**

(45) Bekanntmachung des Hinweises auf die Patenterteilung:
**24.09.86 Patentblatt 86/39**

(84) Benannte Vertragsstaaten:
**BE DE FR GB IT NL**

(56) Entgegenhaltungen:
**DE-A-2 351 155**
**FR-A-2 398 765**
**FR-A-2 424 947**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Waniczek, Helmut, Dr., Wolfskaul 2, D-5000 Koeln (DE)**
Erfinder: **Hohmann, Gerhard, Dr., An der Steinrütsch 35, D-5090 Leverkusen (DE)**
Erfinder: **Bartl, Herbert, Dr., Eichendorffweg 10, D-5068 Odenthal (DE)**
Erfinder: **Mott, Ludwig, Dr., Karl- Jaspers- Strasse 97, D-5090 Leverkusen (DE)**

**0 120 252**

**Beschreibung**

Die Erfindung betrifft die Verwendung von gepfropften Ethylen-Vinylacetat-Copolymeren (EVA-Copolymeren) zur Herstellung von Schmelzklebstoffen.

Für die Verwendung von Polymeren für Klebstoffe wurden bereits eine Vielzahl von Homopolymeren, Copolymeren und Pfropfcopolymeren vorgeschlagen. Deren Gemische mit natürlichen oder künstlichen Harzen und Wachsen eignen sich für Schmelzklebstoffe. Weiterhin ist bekannt, daß sich bestimmte Ethylen-Vinylacetat-Copolymerisate für die Herstellung von Schmelzklebern, die für Holz- oder Papierleimung verwendet werden, geeignet sind.

Durch die fortschreitende Technisierung werden jedoch immer höhere Anforderungen an die Adhäsionseigenschaften von Klebstoffen gestellt, so daß die Haftung auf den verschiedensten Substraten, z.B. auf Metallen, von großem Interesse ist. Dabei möchte man die Vorteile eines Schmelzklebstoffes, z.B. die Lösungsmittelfreiheit, die rasche Abbindung und einfache Verarbeitbarkeit mit guter Metallhaftung verbinden.

Zu diesem Zweck wurde bereits vorgeschlagen, in die Ethylen-Vinylacetat Copolymerisate Säuregruppen durch Einpolymerisieren von Acrylsäure, Maleinsäure oder Maleinsäureanhydrid einzuführen. Die Haftung auf Metallen wird dadurch zwar verbessert, läßt jedoch noch zu wünschen übrig.

Auch die Pfropfung von Carboxylgruppenhaltigen Monomeren auf Ethylen-Vinylacetat-Copolymere wurde bereits beschrieben.

So werden z.B. in der DE-OS 2 351 155 oder in der DE-OS 2 416 614 Pfropfpolymerisate von Carboxylgruppenhaltigen Monomeren auf Ethylen-Vinylacetat-Copolymere für die Verwendung in Schmelzklebstoffen vorgeschlagen. Die Pfropfcopolymerisate werden unter Zuhilfenahme eines Radikalinitiators hergestellt.

Es wurde nun gefunden, daß man Ethylen-Vinylacetat-Copolymerisate, die nach Einführung von Peroxidgruppen in das Polymerisat mit polymerisierbaren Carbonsäuren bepfropft wurden, zur Herstellung von Schmelzklebstoffen verwenden kann.

Die Erfindung betrifft daher die Verwendung von Pfropfcopolymeren der Zusammensetzung 90-99,5 Gew.-% Pfropfgrundlage, bestehend aus einem Copolymeren aus 50-85 Gew.-% Ethyleneinheiten und 15-50 Gew.-% Vinylacetateinheiten sowie 0-10 Gew.-% Einheiten weiterer ungesättigter Verbindungen und 0,5-10 Gew.-% nach dem Verfahren der DE-OS 2 734 105 aufgepfropfter Monomereinheiten, bestehend aus 80-100 Gew.-% Methacrylsäureeinheiten und 0-20 Gew.-% Einheiten weiterer ungesättigter Monomerer zur Herstellung von Schmelzklebstoffen.

Die erfindungsgemäß verwendeten Pfropfcopolymere haben eine Zusammensetzung von 90-99,5 Gew.-% Pfropfgrundlage, bestehend aus einem Copolymeren aus 50-85 Gew.-% Ethyleneinheiten, bevorzugt 55-80 Gew.-% Ethyleneinheiten und 15-50 Gew.-% Vinylacetateinheiten, bevorzugt 20-45 Gew.-% Vinylacetateinheiten, sowie 0-10 Gew.-% Einheiten weiterer ungesättigter Verbindungen und 0,5-10 Gew.-% aufgepfropfter Monomereinheiten, bestehend aus 80-100 Gew.-% Methacrylsäureeinheiten und 0-20 Gew.-% Einheiten weiterer ungesättigter Monomerer, wobei die Pfropfung nach dem Verfahren der DE-OS 2 734 105 erfolgt.

Pfropfprodukte, die durch die übliche Art der Pfropfpolymerisation der ungesättigten Säuren in Gegenwart des Pfropfsubstrates und eines Radikalbildners erhalten werden, zeigen nicht diese guten Eigenschaften, wenn sie zur Herstellung von Schmelzklebstoffen verwendet werden.

Bei erfindungsgemäß verwendeten Pfropfpolymerisaten werden die Peroxidgruppen im Pfropfsubstrat durch Peroxygenierung in der Schmelze nach dem Verfahren der DE-OS 27 34 105 in der Schnecke oder in Knetern eingeführt.

Die verwendeten Ethylen-Vinylacetat-Copolymerisate sollen einen Gehalt an Vinylacetateinheiten von 15-50 Gew.-% besitzen. Bevorzugt finden Ethylen-Vinylacetat-Copolymere mit einem Gehalt an Vinylacetateinheiten von 20-45 Gew.-% Verwendung.

Im Pfropfsubstrat können neben Vinylacetat und Ethylen auch bis zu 10 Gew.-% andere ungesättigte Verbindungen, z.B. Acrylsäure oder Acrylsäureester, Methacrylsäureester oder andere copolymerisierbare ungesättigte Verbindungen einpolymerisiert sein.

Vorzugsweise werden Ethylen-Vinylacetat-Copolymere als Pfropfsubstrat verwendet.

Zur Herstellung der erfindungsgemäß eingesetzten Pfropfpolymerisate werden Ethylen-Vinylacetat-Copolymerisate verwendet, die einen Schmelzindex von 0,5 bis 1.000 g/10 min. (gemessen nach DIN 53 735 bei 190°C und 2,16 kg Belastung) haben. Bevorzugt werden Ethylen-Vinylacetat-Copolymere mit Schmelzindices von 1-500 g/10 min (nach DIN 53 735 bei 190°C und 2,16 kg Belastung) verwendet.

Die erfindungsgemäß eingesetzten Pfropfpolymerisate können nach dem in der DE-OS 2 734 105 beschriebenen Pfropfverfahren hergestellt werden. Werden z.B. die eingesetzten Ethylen-Vinylacetat-Copolymerisate mit Luftsauerstoff unter Druck in der Schmelze peroxigeniert, so werden Produkte erhalten, die einen Gehalt von 50-3.000 ppm an aktivem Sauerstoff enthalten. Bei dieser Umsetzung kann es auch zu einem oxidativen Abbau der Pfropfgrundlage kommen. Dies kann vorteilhaft sein, da dadurch der Schmelzindex des Pfropfproduktes und die Verarbeitungseigenschaft des Schmelzklebstoffes günstig beeinflußt werden kann. Die so erhaltenen peroxidhaltigen Polymerisate werden dann im gleichen Verfahrensschritt zur Polymerisation der Pfropfmonomeren verwendet. Dadurch wird eine Vielzahl von aufgepfropften Seitenketten auf das Pfropfsubstrat eingeführt.

Die aufgepfropften Monomereinheiten bestehen zu 80-100 Gew.-% aus Methacrylsäure. Sie können 0-20 Gew.-% weiterer ungesättigter Verbindungen, z.B. Butylacrylate, Styrol enthalten.

Die erfindungsgemäß verwendeten Klebstoffe werden durch Mischen der Ethylen-Vinylacetat-Pfropfcoplymeren mit klebrigmachenden Harzen hergestellt, wobei gegebenenfalls z.B. Alterungsschutzmittel, Lichtschutzmittel, Weichmacher, Wachse, Füllstoffe und Pigmente zugesetzt werden können.

Als klebrigmachende Harze werden beispielsweise modifizierte oder unmodifizierte Kolophoniumharze wie Kolophonium, hydriertes Kolophonium oder dimerisiertes Kolophonium bzw. deren Ester mit Alkoholen wie Glycerin oder Pentaerythrit, Kohlenwasserstoffharze wie Cumaron- oder Indenharze oder andere Harze, die der Mischung eine Klebrigkeit verleihen, eingesetzt.

Das Mischen der Komponenten wird nach bekannten Methoden in Mischern, Knetern oder Extrudern bei erhöhter Temperatur, normalerweise bei 100-250°C durchgeführt. Es können aber auch die Komponenten bei Raumtemperatur vereinigt und anschließend durch Temperaturerhöhung homogenisiert werden.

Die erfindungsgemäß hergestellten Schmelzklebstoffe zeichnen sich durch ihre gute Haftung auf Metallen aus. Sie eignen sich besonders zum Verkleben bzw. Verbinden von Metallen oder Metallen mit anderen Substraten wie Kunststoffen oder natürlichen Werkstoffen. Selbstverständlich können mit den erfindungsgemäßen Klebstoffen auch andere Werkstoffe verklebt werden.

Die Herstellung solcher Verklebungen ist bekannt und wird beispielsweise durch Auftragen des geschmolzenen Klebstoffes auf das Substrat und anschließendem Verpressen durchgeführt oder durch Herstellung einer Folie aus dem Schmelzklebstoff, welche zwischen den zu verklebenden Teilen erwärmt wird.

**Beispiele**

**Herstellung der Pfropfpolymerisate**

Zur Herstellung der Pfropfpolymerisate wird eine Zweiwellenschneckenpresse verwendet wie sie in der DE-OS 2 734 105 beschrieben ist. Sie teilt sich ein in

1. Einzugszone
2. Aufschmelzzone
3. Kompressionszone
4. Induktionszone und Einlaß für Gase unter Druck
5. Oxidationszone mit Einlaß für Gase unter Druck
6. Kompressionszone
7. Entgasungszone
8. Kompressionszone
9. Polymerisationszone mit Monomer-Einlaß
10. Kompressionszone
11. Verdampferzone
12. Extrudierzone.

Die Zweiwellenschneckenpresse (ZSK) besitzt ein Wellenlängen/Wellendurchmesser-Verhältnis von 50.

Die Mengen- und Temperaturangaben-bzw. andere Verfahrensparameter bei den folgenden Beispielen beziehen sich auf diese Vorrichtung.

**Beispiel 1**

Ein Ethylen-Vinylacetat-Copolymer aus 33 Gew.-% Vinylacetateinheiten und 67 Gew.-% Ethyleneinheiten (Schmelzindex von 20 g /10 min nach DIN 53 735 bei 190°C und 2,16 kg Belastung) wurde in die Dosierzone des beschriebenen Extruders vom Zweiwellenschneckenpresse-Typ mit einem Wellendurchmesser von 32 mm kontinuierlich dosiert (Reaktionsbedingungen siehe Tab. 1).

Es wurden Produkte mit den folgenden Daten erhalten:

| Bei-spiel | $Mi^{190}_{2,16}$ $[g/10\ min]$ | Pfropfauflage (Methacrylsäure) $[Gew.-\%]$ bez. auf Gesamtgewicht |
|---|---|---|
| 1a | 29,3 | 2,31 |
| 1b | 24,6 | 4,13 |
| 1c | 22,0 | 6,78 |

$Mi^{190}_{2,16}$ = Schmelzindex in g/10 min. nach DIN 53735 bei 190°C und 2,16 kg Belastung

**Beispiel 2**

Ein Ethylen-Vinylacetat-Copolymer, bestehend aus 45 Gew.-% Vinylacetateinheiten und 55 Gew.-% Ethyleneinheiten (Schmelzindex von 3 g /10 min nach DIN 53 735 bei 190°C und 2,16 kg) wurde in die Dosierzone des Extruders eindosiert (Reaktionsbedingungen siehe Tab. 1).

Es wurden Produkte mit den folgenden Daten isoliert:

| Bei-spiel | $Mi^{190}_{2,16}$ $[g/min]$ | Pfropfauflage (Methacrylsäure) $[Gew.-\%]$ bez. auf Gesamtmenge |
|---|---|---|
| 2a | 13,6 | 2,16 |
| 2b | 12,8 | 4,4 |
| 2c | 11,6 | 7,5 |
| 2d | 5,5 | 9,18 |

**Beispiel 3**

Ein Ethylen-Vinylacetat-Copolymer aus 28 Gew.-% Vinylacetateinheiten und 72 Gew.-% Ethyleneinheiten (Schmelzindex von 400 g/10 min nach DIN 53 735 bei 190°C und 2,16 kg Belastung) wurde nach dem gleichen Verfahren bepfropft (Reaktionsbedingungen siehe Tab. 1)

Die Pfropfprodukte besitzen folgende Daten:

| Bei-spiel | $Mi^{190}_{2,16}$ $[g/10\ min]$ | Pfropfauflage (Methacrylsäure) $[Gew.-\%]$ bez. auf Gesamtmenge |
|---|---|---|
| 3 | nicht meßbar | 1,54 |

**Beispiel 4**

Ein Ethylen-Vinylacetat-Copolymer wie in Beispiel 2 wurde in die Dosierzone des Extruders dosiert (Reaktionsbedingungen siehe Tab. 1). Als Monomer wurde ein Gemisch aus 90 Gew-% Methacrylsäure und 10 Gew.-% Styrol verwendet.

Die Produkte haben folgende Daten:

| Bei-spiel | $Mi^{190}_{2,16}$ $[g/10\ min]$ | Pfropfauflage $[Gew.-\%]$ bez. auf Gesamtgewicht |
|---|---|---|
| 4a | 9,4 | 2,36 Methacrylsäure + 0,2 Styrol |
| 4b | 8,4 | 4,1 Methacrylsäure + 0,4 Styrol |
| 4c | 6,0 | 7,0 Methacrylsäure + 0,65 Styrol |

**Beispiel 5**

Als Ausgangsprodukt diente ein EVA-Copolymer wie im Beispiel 1. Als Monomer diente ein Gemisch aus 90 Gew.-% Methacrylsäure und 10 Gew.-% Styrol.

Die Produkte haben folgende Daten:

| Bei-spiel | $Mi_{2,16}^{190}$ $[g/10\ min]$ | Pfropfauflage $[Gew.-\%]$ bez. auf Gesamtgewicht |
|---|---|---|
| 5a | 30,1 | 1,73 Methacrylsäure + 0,2 Styrol |
| 5b | 24,7 | 3,37 Methacrylsäure + 0,35 Styrol |
| 5c | 21,1 | 5,67 Methacrylsäure + 0,55 Styrol |

**Beispiel 6**

Ein EVA-Copolymer wie in Beispiel 1 wurde eingesetzt und unter den Reaktionsbedingungen in Tab. 1 verarbeitet. Die Produkte haben folgende Daten:

| Bei-spiel | $Mi_{2,16}^{190}$ $[g/10\ min]$ | Pfropfauflage $[Gew.-\%]$ bez. auf Gesamtgewicht |
|---|---|---|
| 6a | 60,9 | 1,39 Methacrylsäure + 0,34 n-Butylacrylat |
| 6b | 60,2 | 2,88 Methacrylsäure + 0,76 n-Butylacrylat |
| 6c | 44,9 | 3,74 Methacrylsäure + 0,95 n-Butylacrylat |

**Beispiel 7**

Ein EVA-Copolymer wie in Beispiel 2 wurde eingesetzt (Reaktionsbedingungen Tab. 1)
Die Produkte haben folgende Daten:

| Beispiel | $Mi_{2,16}^{190}$ $[g/10\ min]$ | Pfropfauflage $[Gew.-\%]$ bez. auf Gesamtgewicht |
|---|---|---|
| 7a | 13,6 | 1,77 Methacrylsäure + 0,31 n-Butylacrylat |
| 7b | 14,9 | 3,84 Methacrylsäure + 0,72 n-Butylacrylat |
| 7c | 9,6 | 5,28 Methacrylsäure + 1,05 n-Butylacrylat |

**Tabelle 1:** Herstellung der Schmelzklebstoffe

| Beispiel | EVA [g/n] | Wellen-drehzahl [Upm] | Monomer [l/h] | Luftmenge in Zone 4 [l/h] | 5 [l/h] | Temperaturen in Zone [°C] 1 | 2 | 3 | 4 | 5 | 6 | 7 | 8 | 9 | 10 | 11 | 12 |
|---|---|---|---|---|---|---|---|---|---|---|---|---|---|---|---|---|---|
| 2a | 6 500 | 100 | 480 | 340 | 330 | 72 | 100 | 144 | 190 | 220 | 200 | 167 | 158 | 160 | 152 | 190 | 190 |
| 2b | 6 500 | 100 | 720 | 340 | 330 | 72 | 100 | 145 | 190 | 218 | 200 | 170 | 157 | 156 | 147 | 190 | 195 |
| 2c | 6 500 | 100 | 1 200 | 340 | 330 | 70 | 100 | 144 | 190 | 220 | 200 | 170 | 160 | 160 | 150 | 185 | 195 |
| 2d | 6 500 | 100 | 1 500 | 340 | 330 | 70 | 100 | 145 | 190 | 218 | 200 | 170 | 160 | 160 | 150 | 185 | 195 |
| 1a | 6 500 | 100 | 480 | 340 | 330 | 75 | 100 | 139 | 195 | 210 | 200 | 153 | 154 | 150 | 150 | 180 | 195 |
| 1b | 6 500 | 100 | 780 | 340 | 330 | 76 | 100 | 139 | 195 | 212 | 200 | 158 | 154 | 147 | 151 | 177 | 194 |
| 1c | 6 500 | 100 | 1 500 | 340 | 330 | 76 | 100 | 139 | 195 | 212 | 200 | 158 | 154 | 147 | 151 | 178 | 195 |
| 3 | 6 500 | 130 | 900 | 340 | 330 | 63 | 85 | 100 | 182 | 173 | 160 | 134 | 150 | 156 | 158 | 172 | 150 |
| 4a | 6 500 | 100 | 480 | 340 | 330 | 68 | 108 | 140 | 210 | 209 | 175 | 155 | 156 | 140 | 145 | 185 | 190 |
| 4b | 6 500 | 100 | 780 | 340 | 330 | 67 | 110 | 140 | 211 | 209 | 175 | 155 | 156 | 141 | 145 | 185 | 190 |
| 4c | 6 500 | 100 | 1 500 | 340 | 330 | 67 | 110 | 140 | 211 | 208 | 175 | 156 | 156 | 141 | 145 | 185 | 190 |
| 5a | 6 500 | 100 | 480 | 340 | 330 | 90 | 120 | 150 | 220 | 208 | 168 | 160 | 156 | 148 | 155 | 195 | 195 |
| 5b | 6 500 | 100 | 780 | 340 | 330 | 90 | 125 | 150 | 222 | 208 | 168 | 160 | 156 | 148 | 157 | 195 | 195 |
| 5c | 6 500 | 100 | 1 500 | 340 | 330 | 90 | 125 | 150 | 222 | 210 | 168 | 160 | 156 | 150 | 157 | 195 | 195 |
| 6a | 6 300 | 100 | 480 | 420 | 360 | 90 | 120 | 150 | 220 | 208 | 168 | 160 | 156 | 148 | 155 | 195 | 195 |
| 6b | 6 300 | 100 | 7 800 | 420 | 360 | 90 | 125 | 150 | 222 | 208 | 168 | 160 | 156 | 148 | 157 | 195 | 195 |
| 6c | 6 300 | 100 | 1 500 | 420 | 360 | 90 | 125 | 150 | 222 | 210 | 168 | 160 | 156 | 150 | 157 | 195 | 195 |
| 7a | 6 500 | 100 | 480 | 420 | 360 | 90 | 120 | 150 | 220 | 208 | 168 | 160 | 156 | 148 | 157 | 195 | 195 |
| 7b | 6 500 | 100 | 780 | 420 | 360 | 90 | 125 | 150 | 222 | 208 | 168 | 160 | 156 | 148 | 157 | 195 | 195 |
| 7c | 6 500 | 100 | 1 500 | 420 | 360 | 90 | 125 | 150 | 222 | 210 | 168 | 160 | 156 | 150 | 157 | 195 | 195 |

Aus den nach den Beispielen 1-7 hergestellten Pfropfpolymerisate wurden die in Tabelle 2 angegebenen Schmelzklebstoffe A-U hergestellt.

Die Herstellung der Schmelzklebstoffe erfolgte in der Weise, daß in einem Schmelzgefäß bei 180°C zunächst das modifizierte Kolophonium aufgeschmolzen und danach die Pfropfpolymerisate sowie das Alterungschutzmittel eingearbeitet wurden. Anschließend wurde die Schmelze unter Rühren homogenisiert.

Die erhaltene Schmelze wurde bei 180°C mittels eines Rakels in einer Breite von 15 mm, einer Länge von 150 mm und einer Dicke von 0,2 mm auf ein Stahlblech aufgetragen. Anschließend wurde ein Baumwollgewebe aufgelegt und die Klebung bei 180°C mit 0,3 MPa verpreßt.

Von der so hergestellten Klebungen wurde nach einstündiger Lagerung bei 23°C die Schälfestigkeit bei 23°C nach DIN 40 633 bestimmt. Die erhaltenen Ergebnisse sind in Tabelle 3 zusammengefaßt.

Für Vergleiche wurden die nicht erfindungsgemäßen Schmelzklebstoffe V-Y, die Ethylen-Vinylacetat-Acrylsäure-Mischpolymerisate bzw. Ethylen-Vinylacetat-Copolymerisate enthalten, in gleicher Weise hergestellt und geprüft. Die erhaltenen Ergebnisse sind in Tabelle 3 aufgeführt.

**Tabelle: 2**

Verwendete Schmelzkelbstoffe

Alle Schmelzklebstoffe enthalten 75 Gew.-Teile Glycerinester des Hydrierten Kolophoriums und 1 Gew.-Teil 2,2'-Methylen-bis-(4-methyl-6-tert.-butylphenol) als Alterungsschutzmittel.

| Schmelzklebstoff | Pfropfpolymerisate gemäß Beispiel |
|---|---|
| A | 1a |
| B | 1b |
| C | 1c |
| D | 2a |
| E | 2b |
| F | 2c |
| G | 2d |
| H | 3 |
| I | 4a |
| K | 4b |
| L | 4c |
| M | 5a |
| N | 5b |
| O | 5c |
| P | 6a |
| Q | 6b |
| R | 6c |
| S | 7a |
| T | 7b |
| U | 7c |
| V | I |
| W | II |
| X | III |
| Y | IV |

I) Ethylen-Vinylacetat-Acrylsäure-Mischpolymerisat mit einem Vinylacetatgehalt von 33 Gew.-%, einem Ethylengehalt von 64 Gew.-%, einem Acrylsäuregehalt von 3 Gew.-% (Schmelzindex von 60 nach DIN 53735 bei 190° C und 2,16 kg)

II) Ethylen-Vinylacetat-Acrylsäure-Mischpolymerisat mit einem Vinylacetatgehalt von 25 Gew.-%, einem Ethylengehalt von 72 Gew.-%, einen Acrylsäuregehalt von 3 Gew.-% (Schmelzindex von 150 DIN 53735 bei 190° C und 2,16 kg)

III) Ethylen-Vinylacetat-Copolymerisat mit einem Vinylacetatgehalt von 33 Gew.-%, einem Ethylengehalt von 67 Gew.-% (Schmelzindex von 25 nach DIN 53735 bei 190° C und 2,16 kg)

IV) Ethylen-Vinylacetat-Copolymerisat mit einem Vinylacetatgehalt von 45 Gew.-%, einen Ethylengehalt von 55 Gew.-% (Schmelzindex von 2,5 nach DIN 53735 bei 190° C und 2,16 kg)

**Tabelle 3**

| Schmelzklebstoff | Schälfestigkeit (N/mm) nach DIN 40 632 bei 23°C |
|---|---|
| A | 7,9 |
| B | 9,7 |
| C | 12,0 |
| D | 5,1 |
| E | 7,0 |
| F | 7,8 |
| G | 9,1 |
| H | 7,6 |
| I | 8,1 |
| K | 6,6 |
| L | 7,2 |
| M | 5,1 |
| N | 7,4 |
| O | 7,8 |
| P | 10,4 |
| Q | 9,6 |
| R | 8,3 |
| S | 5,7 |
| T | 5,6 |
| U | 7,4 |
| V | 8,2 |
| W | 9,8 |
| X | 5,1 |
| Y | 4,7 |

**Patentansprüche**

1. Verwendung von Pfropfcopolymeren der Zusammensetzung 90-99,5 Gew.-% Pfropfgrundlage, bestehend aus einem Copolymeren aus 50-85 Gew.-% Ethyleneinheiten und 15-50 Gew.-% Vinylacetateinheiten sowie 0-10 Gew.-% Einheiten weiterer ungesättigter Verbindungen und 0,5-10 Gew.-% nach dem Verfahren der DE-OS 2 734 105 aufgepfropfter Monomereinheiten, bestehend aus 80-100 Gew.-% Methacrylsäureeinheiten und 0-20 Gew.-% Einheiten weiterer ungesättigter Monomerer, zur Herstellung von Schmelzklebstoffen.

2. Schmelzklebstoffe, bestehend aus Pfropfpolymeren der Zusammensetzung 90-99,5 Gew.-% Pfropfgrundlage, bestehend aus einem Copolymeren aus 50-85 Gew.-% Ethyleneinheiten und 15-50 Gew.-% Vinylacetateinheiten sowie 0-10 Gew.-% Einheiten weiterer ungesättigter Verbindungen und 0,5-10 Gew.-% nach dem Verfahren der DE-OS 2 734 105 aufgepfropfter Monomereinheiten, bestehend aus 80-100 Gew.-% Methacrylsäureeinheiten und 0-20 Gew.-% Einheiten weiterer ungesättigter Monomerer, einem klebrig machendem Harz und gegebenenfalls weiteren Zusätzen.

**Claims**

1. Use of graft copolymers composed of 90-99.5% by weight of a graft base, consisting of a copolymer of 50-85% by weight of ethylene units and 15-50% by weight of vinyl acetate units and 0-10% by weight of units of other unsaturated compounds, and 0.5-10% by weight of monomer units grafted on by the process of OE-OS (German Offenlegungsschrift) no. 2,734,105 and consisting of 80-100% by weight of methacrylic acid units and 0-20% by weight of units of other unsaturated monomers, for the production of hot-melt adhesives.

2. Hot-melt adhesives consisting of graft polymers composed of 90-99.5% by weight of a graft base, consisting of a copolymer of 50-85% by weight of ethylene units and 15-50% by weight of vinyl acetate units and 0-10% by weight of units of other insaturated compounds, and 0.5-10% by weight of monomer units grafted on by the process of DE-OS no. 2,734,105 and consisting of 80-100% by weight of methacrylic acid units and 0-20% by weight of units of other unsaturated monomers, a tackifying resin and, optionally, other additives.

**Revendications**

1. Utilisation de copolymères greffés de composition 90 à 99,5% en poids de substrat de greffage qui consiste en un copolymère à 50-85% en poids d'unités éthylène et à 15-50% en poids d'unités d'acétate de vinyle de même qu'à 0-10% en poids d'unités d'autres composés insaturés, et 0,5 à 10% en poids d'unités monomères greffées conformément au procédé de la demande de brevet allemand DE-OS 2 734 105, qui consistent en 80 à 100% en poids d'unités acide méthacrylique et en 0 à 20% en poids d'unités d'autres monomères insaturés, en vue de la fabrication d'adhésifs fusibles.

2. Adhésifs fusibles, consistant en des polymères greffés de composition 90 à 99,5% en poids de substrat de greffage qui consiste en un copolymère à 50-85% en poids d'unités éthylène et à 15-50% en poids d'unités acétate de vinyle et aussi à 0-10% en poids d'unités d'autres composés insaturés, et 0,5 à 10% en poids d'unités monomères greffées conformément au procédé de la demande de brevet allemand DE-OS 2 734 105 qui consistent en 80-100% en poids d'unités acide méthacrylique et en 0-20% en poids d'unités d'autres monomères insaturés, en une résine apportant du collant et éventuellement en d'autres additifs.